# EUROPEAN PATENT APPLICATION

(11) **EP 4 411 895 A1**
(43) Date of publication of application: **07.08.2024**
(21) Application number: 22875798.5
(22) Date of filing: 12.09.2022
(51) Int. Cl.: H01M 4/62, H01M 4/133, H01M 4/134, H01M 4/1393, H01M 4/1395

(54) **ELECTRICALLY CONDUCTIVE MATERIAL PASTE FOR NONAQUEOUS SECONDARY BATTERY, SLURRY FOR NONAQUEOUS SECONDARY BATTERY NEGATIVE ELECTRODE, NEGATIVE ELECTRODE FOR NONAQUEOUS SECONDARY BATTERY, AND NONAQUEOUS SECONDARY BATTERY**

(30) Priority: 30.09.2021 JP 2021161737
(71) Applicant: Zeon Corporation, Tokyo 100-8246 (JP)
(72) Inventor: YAMAMOTO Norikazu, Tokyo 100-8246 (JP); OSHIMA Hiroki, Tokyo 100-8246 (JP)
(74) Representative: Maiwald GmbH
(86) International application number: PCT/JP2022/034115
(87) International publication number: WO 2023/053926

(57) **Abstract**

Provided is a conductive material paste for a non-aqueous secondary battery with which it is possible to form an electrode that has suppressed dusting and that can cause a non-aqueous secondary battery to display excellent cycle characteristics. The conductive material paste contains carbon nanotubes, a dispersant, and water. The dispersant includes a water-soluble polymer including a conjugated diene monomer unit and a carboxy group-containing monomer unit.

## Description

### TECHNICAL FIELD

The present disclosure relates to a conductive material paste for a non-aqueous secondary battery, a slurry for a non-aqueous secondary battery negative electrode, a negative electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide range of applications. An electrode for a non-aqueous secondary battery may, for example, include a current collector and an electrode mixed material layer formed through drying of a slurry for a non-aqueous secondary battery electrode on the current collector.

In recent years, carbon nanotubes (hereinafter, also abbreviated as "CNTs") have been used as conductive materials in the formation of electrode mixed material layers. In the formation of an electrode mixed material layer using CNTs, a technique of premixing CNTs as a conductive material and a dispersant to obtain a conductive material paste for a non-aqueous secondary battery and then combining the obtained conductive material paste with an electrode active material to produce a slurry for an electrode has been proposed with the aim of obtaining an electrode mixed material layer having good dispersion of CNTs (for example, refer to Patent Literature (PTL) 1 to 4).

### CITATION LIST

### Patent Literature

PTL 1: WO2020/196115A1
PTL 2: WO2021/085344A1
PTL 3: WO2021/085343A1
PTL 4: JP2021-72279A

### SUMMARY

### (Technical Problem)

It is desirable that an electrode for a secondary battery causes a secondary battery including the electrode to display excellent cycle characteristics. One cause of deterioration of cycle characteristics is thought to be the cutting of electrical conduction paths among an electrode active material caused by expansion and contraction of the electrode active material in accompaniment to charging and discharging. In order to address this problem, a technique of hardening an electrode mixed material layer in order to suppress expansion and contraction of an electrode active material has conventionally been adopted.

However, hardening of an electrode mixed material layer has resulted in a problem of detachment of components such as an electrode active material and a conductive material forming the electrode mixed material layer (i.e., the occurrence of dusting) in situations such as when an electrode including the electrode mixed material layer is subjected to slitting and when the electrode is wound up in production of a non-aqueous secondary battery. Moreover, according to studies conducted by the inventors, the use of CNTs as a conductive material tends to harden an electrode mixed material layer to a greater degree than expected, and thus an electrode that includes an electrode mixed material layer containing CNTs requires further suppression of dusting.

In other words, in the conventional technique described above, it would be desirable to suppress dusting of an electrode while also causing a secondary battery to display excellent cycle characteristics.

Accordingly, one object of the present disclosure is to provide a conductive material paste for a non-aqueous secondary battery with which it is possible to form an electrode that has suppressed dusting and that can cause a non-aqueous secondary battery to display excellent cycle characteristics.

Another object of the present disclosure is to provide a slurry for a non-aqueous secondary battery negative electrode with which it is possible to form a negative electrode that has suppressed dusting and that can cause a non-aqueous secondary battery to display excellent cycle characteristics.

Another object of the present disclosure is to provide a negative electrode for a non-aqueous secondary battery that has suppressed dusting and that can cause a non-aqueous secondary battery to display excellent cycle characteristics.

Another object of the present disclosure is to provide a non-aqueous secondary battery having excellent cycle characteristics.

### (Solution to Problem)

The inventors conducted diligent investigation with the aim of solving the problems set forth above. The inventors made a new discovery that by using a water-soluble polymer having a specific chemical composition as a dispersant in a conductive material paste that contains CNTs as a conductive material and a dispersant in water serving as a dispersion medium, it is possible to produce an electrode that has suppressed dusting during slitting or the like and a secondary battery that has excellent cycle characteristics, and, in this manner, the inventors completed the present disclosure.

Specifically, the present disclosure aims to advantageously solve the problems set forth above, and, according to the present disclosure, conductive material pastes for a non-aqueous secondary battery according to the following [1] to [8], slurries for a non-aqueous secondary battery negative electrode according to the following [9] to [11], a negative electrode for a non-aqueous secondary battery according to the following [12], and a non-aqueous secondary battery according to the following [13] are provided.
[1] A conductive material paste for a non-aqueous secondary battery comprising carbon nanotubes, a dispersant, and water, wherein the dispersant includes a water-soluble polymer including a conjugated diene monomer unit and a carboxy group-containing monomer unit.

By forming an electrode mixed material layer using a conductive material paste that contains CNTs, a dispersant including the specific water-soluble polymer set forth above, and water, it is possible to suppress dusting of an obtained electrode while also causing a secondary battery including the electrode to display excellent cycle characteristics.

When a polymer is said to "include a monomer unit" in the present specification, this means that "a polymer obtained using that monomer includes a repeating unit derived from the monomer".

When a polymer is said to be "water-soluble" in the present specification, this means that when 0.5 g of the polymer is dissolved in 100 g of water at a temperature of 25°C, insoluble content is less than 1.0 mass%.

[2] The conductive material paste for a non-aqueous secondary battery according to the foregoing [1], wherein the water-soluble polymer has a weight-average molecular weight of not less than 20,000 and not more than 500,000.

When the weight-average molecular weight of the water-soluble polymer serving as a dispersant is within the range set forth above, swelling of an electrode after cycling can be suppressed while also further improving cycle characteristics of a secondary battery. Moreover, dispersion stability of the conductive material paste, viscosity stability of a slurry for an electrode, and flexibility of an electrode can be increased.

The "weight-average molecular weight" of a polymer referred to in the present specification can be measured by a method described in the EXAMPLES section.

[3] The conductive material paste for a non-aqueous secondary battery according to the foregoing [1] or [2], wherein content of the water-soluble polymer is not less than 10 parts by mass and not more than 150 parts by mass per 100 parts by mass of the carbon nanotubes.

When the content of the water-soluble polymer serving as a dispersant is within the range set forth above, dusting of an electrode can be even further suppressed and swelling of the electrode after cycling can be suppressed while also further improving cycle characteristics of a secondary battery. Moreover, dispersion stability of the conductive material paste, viscosity stability of a slurry for an electrode, and flexibility of an electrode can be increased.

[4] The conductive material paste for a non-aqueous secondary battery according to any one of the foregoing [1] to [3], wherein the conjugated diene monomer unit in the water-soluble polymer includes an isoprene unit.

By using a water-soluble polymer that includes an isoprene unit as a dispersant, it is possible to even further suppress dusting of an electrode.

[5] The conductive material paste for a non-aqueous secondary battery according to any one of the foregoing [1] to [4], wherein proportional content of the conjugated diene monomer unit in the water-soluble polymer is 10 mass% or more when all repeating units included in the water-soluble polymer are taken to be 100 mass%.

By using a water-soluble polymer in which the proportional content of a conjugated diene monomer unit is 10 mass% or more as a dispersant, it is possible to even further suppress dusting of an electrode and suppress swelling of the electrode after cycling while also further improving cycle characteristics of a secondary battery. Moreover, dispersion stability of the conductive material paste and flexibility of an electrode can be increased.

The proportional content of a repeating unit (monomer unit) in a polymer referred to in the present specification can be measured using a nuclear magnetic resonance (NMR) method such as ¹H-NMR or ¹³C-NMR.

[6] The conductive material paste for a non-aqueous secondary battery according to any one of the foregoing [1] to [5], wherein the carboxy group-containing monomer unit in the water-soluble polymer includes one or more selected from the group consisting of a sodium carboxylate group, a lithium carboxylate group, and an ammonium carboxylate group.

By using a water-soluble polymer that includes at least any one of the carboxylate salt groups set forth above as a dispersant, it is possible to even further suppress dusting of an electrode and even further suppress swelling of the electrode after cycling while also further improving cycle characteristics of a secondary battery. Moreover, dispersion stability of the conductive material paste, viscosity stability of a slurry for an electrode, and flexibility of an electrode can be increased.

[7] The conductive material paste for a non-aqueous secondary battery according to any one of the foregoing [1] to [6], having a pH of not lower than 6 and not higher than 10.

By using a conductive material paste that has a pH within the range set forth above, it is possible to even further suppress dusting of an electrode and suppress swelling of the electrode after cycling while also further improving cycle characteristics of a secondary battery. Moreover, dispersion stability of the conductive material paste, viscosity stability of a slurry for an electrode, and flexibility of an electrode can be increased.

[8] The conductive material paste for a non-aqueous secondary battery according to any one of the foregoing [1] to [7], further comprising carbon black.

[9] A slurry for a non-aqueous secondary battery negative electrode comprising: a negative electrode active material; and the conductive material paste for a non-aqueous secondary battery according to any one of the foregoing [1] to [8].

By forming a negative electrode mixed material layer using a slurry for a negative electrode that contains a negative electrode active material and any one of the conductive material pastes set forth above, it is possible to suppress dusting of an obtained negative electrode while also causing a secondary battery including the negative electrode to display excellent cycle characteristics.

[10] The slurry for a non-aqueous secondary battery negative electrode according to the foregoing [9], wherein the negative electrode active material includes a silicon-based negative electrode active material.

By using a silicon-based negative electrode active material (negative electrode active material that contains silicon) as a negative electrode active material, it is possible to increase the capacity of a secondary battery. Note that a silicon-based negative electrode active material displays a particularly large degree of expansion and contraction in accompaniment to charging and discharging. However, since a presently disclosed slurry for a negative electrode is produced using a presently disclosed conductive material paste set forth above, it is possible to suppress swelling of a negative electrode after cycling while also sufficiently improving cycle characteristics of a secondary battery even in a situation in which a silicon-based negative electrode active material is used as a negative electrode active material.

[11] The slurry for a non-aqueous secondary battery negative electrode according to the foregoing [9] or [10], further comprising a particulate polymer, wherein the particulate polymer includes a carboxy group-containing monomer unit, an aromatic vinyl monomer unit, and a conjugated diene monomer unit, and proportional content of the carboxy group-containing monomer unit in the particulate polymer is not less than 3 mass% and not more than 30 mass% when all repeating units included in the particulate polymer are taken to be 100 mass%.

By using a slurry for a negative electrode that contains the particulate polymer set forth above, it is possible to even further suppress dusting of a negative electrode and even further suppress swelling of the negative electrode after cycling while also further improving cycle characteristics of a secondary battery.

Note that the term "particulate polymer" as used in the present specification refers to water-insoluble particles that are formed of a polymer. Moreover, when particles are said to be "water-insoluble" in the present specification, this means that when 0.5 g of polymer is dissolved in 100 g of water at a temperature of 25°C, insoluble content is 90 mass% or more.

[12] A negative electrode for a non-aqueous secondary battery comprising a negative electrode mixed material layer formed using the slurry for a non-aqueous secondary battery negative electrode according to any one of the foregoing [9] to [11].

A negative electrode that includes a negative electrode mixed material layer formed using any one of the slurries for a negative electrode set forth above has suppressed dusting and can cause a secondary battery to display excellent cycle characteristics.

[13] A non-aqueous secondary battery comprising the negative electrode for a non-aqueous secondary battery according to the foregoing [12].

A non-aqueous secondary battery that includes the negative electrode set forth above has excellent cycle characteristics.

### (Advantageous Effect)

According to the present disclosure, it is possible to provide a conductive material paste for a non-aqueous secondary battery with which it is possible to form an electrode that has suppressed dusting and that can cause a non-aqueous secondary battery to display excellent cycle characteristics.

Moreover, according to the present disclosure, it is possible to provide a slurry for a non-aqueous secondary battery negative electrode with which it is possible to form a negative electrode that has suppressed dusting and that can cause a non-aqueous secondary battery to display excellent cycle characteristics.

Furthermore, according to the present disclosure, it is possible to provide a negative electrode for a non-aqueous secondary battery that has suppressed dusting and that can cause a non-aqueous secondary battery to display excellent cycle characteristics.

Also, according to the present disclosure, it is possible to provide a non-aqueous secondary battery having excellent cycle characteristics.

### DETAILED DESCRIPTION

The following provides a detailed description of embodiments of the present disclosure.

A presently disclosed conductive material paste for a non-aqueous secondary battery can be used as a material in production of a slurry for a non-aqueous secondary battery electrode (preferably a slurry for a non-aqueous secondary battery negative electrode). Moreover, a presently disclosed slurry for a non-aqueous secondary battery negative electrode is produced using the presently disclosed conductive material paste for a non-aqueous secondary battery. Furthermore, a feature of a presently disclosed negative electrode for a non-aqueous secondary battery is that it includes a negative electrode mixed material layer formed using the presently disclosed slurry for a non-aqueous secondary battery negative electrode. Also, a feature of a presently disclosed non-aqueous secondary battery is that it includes the presently disclosed negative electrode for a non-aqueous secondary battery.

### (Conductive material paste for non-aqueous secondary battery)

The presently disclosed conductive material paste contains CNTs, a dispersant, and water and optionally contains other components. Note that the conductive material paste does not normally contain an electrode active material (positive electrode active material or negative electrode active material).

A feature of the presently disclosed conductive material paste is that a water-soluble polymer including a conjugated diene monomer unit and a carboxy group-containing monomer unit is used as a dispersant. By producing an electrode using the presently disclosed conductive material paste that contains this water-soluble polymer, it is possible to suppress dusting of an obtained electrode while also causing a secondary battery including the electrode to display excellent cycle characteristics. Although it is not clear why the presently disclosed conductive material paste has effects such as described above, the reason for this is presumed to be as follows.

Firstly, the water-soluble polymer having the chemical composition described above dissolves in water serving as a dispersion medium in the conductive material paste while also adsorbing well to surfaces of the CNTs through the contribution of the carboxy group-containing monomer unit and the conjugated diene monomer unit and enabling good dispersion of the CNTs. Moreover, the water-soluble polymer is soft due to the inclusion of the conjugated diene monomer unit and thus can contribute to improving flexibility of an electrode mixed material layer.

Through the contribution of the water-soluble polymer having properties such as set forth above, it is possible to sufficiently ensure dispersion stability of the conductive material paste and viscosity stability of a slurry for an electrode, and it is also possible to form an electrode mixed material layer having the CNTs serving as a conductive material dispersed well therein. Moreover, this electrode mixed material layer has excellent flexibility, can display good binding capacity, and also enables good suppression of dusting that can occur during slitting of an electrode, winding of an electrode, and so forth. Furthermore, swelling of the electrode mixed material layer after cycling is suppressed as a result of expansion and contraction of an electrode active material in accompaniment to charging and discharging being tracked well by the water-soluble polymer, and thus it is possible to cause a secondary battery to display excellent cycle characteristics.

### <Carbon nanotubes>

The CNTs may be single-walled carbon nanotubes or may be multi-walled carbon nanotubes. Moreover, single-walled CNTs and multi-walled CNTs may be used in combination as the CNTs. Note that it is preferable to use single-walled CNTs as the CNTs from a viewpoint of further improving cycle characteristics of a secondary battery.

The average diameter of the CNTs is preferably 0.5 nm or more, more preferably 1 nm or more, and even more preferably 2 nm or more, and is preferably 50 nm or less, more preferably 40 nm or less, and even more preferably 20 nm or less. When the average diameter of the CNTs is within any of the ranges set forth above, dusting of an electrode can be even further suppressed and swelling of the electrode after cycling can be even further suppressed while also further improving cycle characteristics of a secondary battery. Moreover, dispersion stability of the conductive material paste, viscosity stability of a slurry for an electrode, and flexibility of an electrode can be increased.

The average diameter of the CNTs referred to in the present specification can be determined as an arithmetic mean value of measured values obtained by observing the CNTs under a transmission electron microscope (TEM) and measuring the diameters (external diameters) of 50 CNTs from an obtained TEM image.

A ratio of G band peak intensity relative to D band peak intensity (G/D ratio) in a Raman spectrum of the CNTs is preferably 0.4 or more, more preferably 0.5 or more, and even more preferably 0.6 or more. When the G/D ratio of the CNTs is 0.4 or more, cycle characteristics of a secondary battery can be further improved. Note that the upper limit for the G/D ratio of the CNTs may be 200 or less, for example, but is not specifically limited thereto.

The "G/D ratio" of the CNTs referred to in the present specification can be determined by measuring a Raman spectrum of the CNTs using a microscopic laser Raman spectrophotometer (Nicolet Almega XR produced by Thermo Fisher Scientific), determining the intensity of a G band peak observed near 1590 cm⁻¹ and the intensity of a D band peak observed near 1340 cm⁻¹ in the obtained Raman spectrum, and then calculating a ratio of these intensities.

The CNTs can be CNTs that have been synthesized by a known CNT synthesis method such as arc discharge, laser ablation, or chemical vapor deposition (CVD).

Although no specific limitations are placed on the content of the CNTs in the conductive material paste, the content of the CNTs is preferably 0.5 mass% or more, and more preferably 1.0 mass% or more when the mass of the entire conductive material paste is taken to be 100 mass%, and is preferably 30.0 mass% or less, more preferably 15.0 mass% or less, and even more preferably 7.0 mass% or less when the mass of the entire conductive material paste is taken to be 100 mass%. When the content of the CNTs in the conductive material paste is within any of the ranges set forth above, dispersion stability of the conductive material paste can be increased while also further improving cycle characteristics of a secondary battery.

### <Dispersant>

The presently disclosed conductive material paste is required to contain a water-soluble polymer including a conjugated diene monomer unit and a carboxy group-containing monomer unit as a dispersant as previously described. Note that the water-soluble polymer may include repeating units other than the conjugated diene monomer unit and the carboxy group-containing monomer unit (i.e., other repeating units).

Moreover, the presently disclosed conductive material paste may contain a dispersant other than the above-described water-soluble polymer.

### <<Conjugated diene monomer unit>>

Examples of conjugated diene monomers that can form the conjugated diene monomer unit of the water-soluble polymer include 1,3-butadiene, isoprene (2-methyl-1,3-butadiene), 2,3-dimethyl-1,3-butadiene, and 1,3-pentadiene. One of these conjugated diene monomers may be used individually, or two or more of these conjugated diene monomers may be used in combination. Of these conjugated diene monomers, 1,3-butadiene and isoprene are preferable from a viewpoint of even further suppressing dusting of an electrode, and isoprene is more preferable. In other words, the water-soluble polymer preferably includes either or both of a 1,3-butadiene unit and an isoprene unit as the conjugated diene monomer unit, and more preferably includes an isoprene unit as the conjugated diene monomer unit.

The proportional content of the conjugated diene monomer unit in the water-soluble polymer when all repeating units included in the water-soluble polymer are taken to be 100 mass% is preferably 5 mass% or more, more preferably 10 mass% or more, even more preferably 15 mass% or more, further preferably 20 mass% or more, and particularly preferably 30 mass% or more, and is preferably 80 mass% or less, more preferably 70 mass% or less, even more preferably 60 mass% or less, and particularly preferably 50 mass% or less. When the proportional content of the conjugated diene monomer unit in the water-soluble polymer is 5 mass% or more, dusting of an electrode can be further suppressed and swelling of the electrode after cycling can be suppressed while also further improving cycle characteristics of a secondary battery. Moreover, dispersion stability of the conductive material paste and flexibility of an electrode can be increased. On the other hand, when the proportional content of the conjugated diene monomer unit in the water-soluble polymer is 80 mass% or less, dispersion stability of the conductive material paste can be increased, swelling of an electrode after cycling can be suppressed, and cycle characteristics of a secondary battery can be further improved.

### <<Carboxy group-containing monomer unit>>

The carboxy group-containing monomer unit is a repeating unit that includes a carboxy group (-COOH). Note that in the conductive material paste, the carboxy group of the carboxy group-containing monomer unit is preferably partially or fully in the form of at least any one of a sodium carboxylate group (-COO⁻Na⁺), a lithium carboxylate group (-COO⁻Li⁺), and an ammonium carboxylate group (-COO⁻NH₄⁺). Through the carboxy group being in the form of at least any one of the carboxylate salt groups described above, it is possible to even further suppress dusting of an electrode and even further suppress swelling of the electrode after cycling while also further improving cycle characteristics of a secondary battery. Moreover, dispersion stability of the conductive material paste, viscosity stability of a slurry for an electrode, and flexibility of an electrode can be increased.

Examples of carboxy group-containing monomers that can form the carboxy group-containing monomer unit of the water-soluble polymer include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can also be used as a carboxy group-containing monomer.

One carboxy group-containing monomer may be used individually, or two or more carboxy group-containing monomers may be used in combination. Acrylic acid and methacrylic acid are preferable as carboxy group-containing monomers from a viewpoint of even further suppressing swelling of an electrode while also further improving cycle characteristics of a secondary battery. In other words, the water-soluble polymer preferably includes either or both of an acrylic acid unit and a methacrylic acid unit as the carboxy group-containing monomer unit.

The proportional content of the carboxy group-containing monomer unit in the water-soluble polymer when all repeating units included in the water-soluble polymer are taken to be 100 mass% is preferably 20 mass% or more, more preferably 30 mass% or more, and even more preferably 40 mass% or more, and is preferably 95 mass% or less, more preferably 90 mass% or less, even more preferably 80 mass% or less, further preferably 70 mass% or less, and particularly preferably 60 mass% or less. When the proportional content of the carboxy group-containing monomer unit in the water-soluble polymer is 20 mass% or more, dispersion stability of the conductive material paste can be increased, swelling of an electrode after cycling can be suppressed, and cycle characteristics of a secondary battery can be further improved. On the other hand, when the proportional content of the carboxy group-containing monomer unit in the water-soluble polymer is 95 mass% or less, dusting of an electrode can be even further suppressed and swelling of the electrode after cycling can be suppressed while also further improving cycle characteristics of a secondary battery. Moreover, dispersion stability of the conductive material paste and flexibility of an electrode can be increased.

### <<Other repeating units>>

Examples of other repeating units besides the above-described conjugated diene monomer unit and carboxy group-containing monomer unit that can be included in the water-soluble polymer include monomer units derived from known monomers (other monomers) that are copolymerizable with a conjugated diene monomer and a carboxy group-containing monomer such as described above without any specific limitations. One other monomer may be used individually, or two or more other monomers may be used in combination.

However, from a viewpoint of even further suppressing dusting of an electrode and further improving cycle characteristics of a secondary battery, the proportional content of other repeating units in the water-soluble polymer when all repeating units included in the water-soluble polymer are taken to be 100 mass% is preferably 20 mass% or less, more preferably 10 mass% or less, even more preferably 5 mass% or less, further preferably 1 mass% or less, and particularly preferably 0 mass%.

In other words, the total proportional content of the conjugated diene monomer unit and the carboxy group-containing monomer unit in the water-soluble polymer when all repeating units included in the water-soluble polymer are taken to be 100 mass% is preferably 80 mass% or more, more preferably 90 mass% or more, even more preferably 95 mass% or more, further preferably 99 mass% or more, and particularly preferably 100 mass%.

### <<Weight-average molecular weight>>

The weight-average molecular weight of the water-soluble polymer is preferably 20,000 or more, more preferably 30,000 or more, even more preferably 50,000 or more, further preferably 60,000 or more, and particularly preferably 70,000 or more, and is preferably 900,000 or less, more preferably 500,000 or less, even more preferably 350,000 or less, and further preferably 320,000 or less. When the weight-average molecular weight of the water-soluble polymer is 20,000 or more, viscosity stability of a slurry for an electrode and flexibility of an electrode can be improved. On the other hand, when the weight-average molecular weight of the water-soluble polymer is 900,000 or less, swelling of an electrode after cycling can be suppressed while also further improving cycle characteristics of a secondary battery. Moreover, dispersion stability of the conductive material paste and flexibility of an electrode can be increased.

### <<Production method>>

No specific limitations are placed on the method by which the water-soluble polymer serving as a dispersant is produced. For example, the water-soluble polymer may be produced by polymerizing a monomer composition containing one type or two or more types of monomers in an aqueous solvent and then optionally performing hydrogenation. Note that the proportional content of each monomer in the monomer composition can be set in accordance with the desired proportional content of each repeating unit (monomer unit) in the polymer.

Although the polymerization method is not specifically limited, a method such as solution polymerization, suspension polymerization, bulk polymerization, or emulsion polymerization may be used. Moreover, ionic polymerization, radical polymerization, living radical polymerization, various types of condensation polymerization, addition polymerization, or the like can be adopted as the polymerization reaction. Furthermore, a known emulsifier and/or polymerization initiator can be used as necessary in the polymerization. The hydrogenation can be performed by a known method.

After polymerization, neutralization may be performed using sodium hydroxide aqueous solution, lithium hydroxide aqueous solution, ammonia water, or the like, as necessary, so as to produce a water-soluble polymer including a carboxylate salt group such as previously described.

### <<Content>>

The content of the water-soluble polymer in the conductive material paste is preferably 1 part by mass or more, more preferably 5 parts by mass or more, even more preferably 10 parts by mass or more, further preferably 20 parts by mass or more, and particularly preferably 40 parts by mass or more per 100 parts by mass of the CNTs, and is preferably 200 parts by mass or less, more preferably 150 parts by mass or less, even more preferably 120 parts by mass or less, and particularly preferably 100 parts by mass or less per 100 parts by mass of the CNTs. When the content of the water-soluble polymer is 1 part by mass or more per 100 parts by mass of the CNTs, dusting of an electrode can be even further suppressed and swelling of the electrode after cycling can be suppressed while also further improving cycle characteristics of a secondary battery. Moreover, dispersion stability of the conductive material paste, viscosity stability of a slurry for an electrode, and flexibility of an electrode can be increased. On the other hand, when the content of the water-soluble polymer is 200 parts by mass or less per 100 parts by mass of the CNTs, swelling of an electrode after cycling can be suppressed while also further improving cycle characteristics of a secondary battery.

### <Other components>

Examples of components other than the above-described CNTs, dispersant, and water as a dispersion medium that can be contained in the conductive material paste include, but are not specifically limited to, conductive materials other than CNTs, dispersion media other than water, and components subsequently described in the "Slurry for non-aqueous secondary battery negative electrode" section with the exception of negative electrode active materials.

Examples of conductive materials other than CNTs that can be used include, but are not specifically limited to, carbon black (acetylene black, Ketjenblack^{®} (Ketjenblack is a registered trademark in Japan, other countries, or both), furnace black, etc.), graphite, carbon flake, and carbon nanofiber.

A known organic solvent that is miscible with water can be used as a dispersion medium other than water.

Note that one other component may be used individually, or two or more other components may be used in combination.

### <Production method of conductive material paste>

No specific limitations are placed on the method by which the conductive material paste is produced. The conductive material paste can be produced by mixing CNTs, a dispersant that includes the specific water-soluble polymer, water, and other components that are used as necessary. The mixing can be performed using a known mixing device such as a disper blade, a Homo Mixer, a planetary mixer, a kneader, a ball mill, or a bead mill.

The conductive material paste obtained in this manner preferably has a pH of not lower than 6 and not higher than 10. By using a conductive material paste that has a pH within the range set forth above, it is possible to even further suppress dusting of an electrode and even further suppress swelling of the electrode after cycling while also further improving cycle characteristics of a secondary battery. Moreover, dispersion stability of the conductive material paste, viscosity stability of a slurry for an electrode, and flexibility of an electrode can be increased.

### (Slurry for non-aqueous secondary battery negative electrode)

The presently disclosed slurry for a negative electrode contains the conductive material paste set forth above and a negative electrode active material and may contain optional components such as a binder as necessary. In other words, the presently disclosed slurry for a negative electrode contains CNTs, a water-soluble polymer as a dispersant, and water and may contain optional components such as a binder as necessary.

A negative electrode including a negative electrode mixed material layer formed from a slurry for a negative electrode that contains the conductive material paste set forth above in this manner has suppressed dusting and can cause a secondary battery to display excellent cycle characteristics.

### <Negative electrode active material>

Any known negative electrode active material can be used without any specific limitations as the negative electrode active material that is compounded in the slurry for a negative electrode.

For example, a negative electrode active material that is used in a lithium ion secondary battery may be a carbon-based negative electrode active material, a metal-based negative electrode active material, a negative electrode active material that is a combination thereof, or the like, but is not specifically limited thereto.

The carbon-based negative electrode active material can be defined as an active material that contains carbon as its main framework and into which lithium can be inserted (also referred to as "doping"). Examples of carbon-based negative electrode active materials include carbonaceous materials and graphitic materials.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material, for example. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

The graphitic material may be natural graphite or artificial graphite, for example.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

The metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials that may be used include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti) and alloys thereof, and oxides, sulfides, nitrides, silicides, carbides, and phosphides of any thereof. Of these examples, a silicon-based negative electrode active material is preferable as the metal-based negative electrode active material. One reason for this is that the capacity of a lithium ion secondary battery can be increased through use of a silicon-based negative electrode active material.

The silicon-based negative electrode active material may be silicon (Si), a silicon-containing alloy, SiO, SiOₓ, a composite of a Si-containing material and conductive carbon obtained by coating or combining the Si-containing material with the conductive carbon, or the like, for example.

The proportion constituted by the silicon-based negative electrode active material among the negative electrode active material when the entire negative electrode active material is taken to be 100 mass% is preferably 1 mass% or more, and more preferably 3 mass% or more, and is preferably 20 mass% or less, and more preferably 15 mass% or less. The capacity of a secondary battery can be sufficiently increased when the proportion constituted by the silicon-based negative electrode active material is 1 mass% or more, whereas cycle characteristics of a secondary battery can be further improved when the proportion constituted by the silicon-based negative electrode active material is 20 mass% or less.

Note that the particle diameter of the negative electrode active material is not specifically limited and can be the same as that of a conventionally used negative electrode active material.

The amount of the negative electrode active material in the slurry for a negative electrode is also not specifically limited and can be set within a conventionally used range.

Although one negative electrode active material may be used individually or two or more negative electrode active materials may be used in combination, it is preferable that the slurry for a negative electrode contains both a carbon-based negative electrode active material formed of a graphitic material and a silicon-based negative electrode active material from a viewpoint of sufficiently increasing the capacity of a secondary battery while also further improving cycle characteristics of the secondary battery.

### <Optional components>

Examples of optional components that can be contained in the slurry for a negative electrode include binders, viscosity modifiers, reinforcing materials, antioxidants, and additives for electrolyte solution having a function of inhibiting electrolyte solution decomposition. One of these optional components may be used individually, or two or more of these optional components may be used in combination.

Of the optional components described above, it is preferable that the slurry for a negative electrode contains a binder from a viewpoint of even further suppressing dusting of a negative electrode and even further suppressing swelling of the negative electrode after cycling while also further improving cycle characteristics of a secondary battery.

### <<Binder>>

Any binder that can be used as a binder for a negative electrode can be used as the binder without any specific limitations.

In the present disclosure, it is preferable that a particulate polymer including at least a carboxy group-containing monomer unit, an aromatic vinyl monomer unit, and a conjugated diene monomer unit is used as the binder from a viewpoint of even further suppressing dusting of a negative electrode and even further suppressing swelling of the negative electrode after cycling while also further improving cycle characteristics of a secondary battery.

Note that the particulate polymer that can be used as the binder can be produced by a known method.

### [Carboxy group-containing monomer unit]

Examples of carboxy group-containing monomers that can form the carboxy group-containing monomer unit of the particulate polymer include the same monomers as carboxy group-containing monomers previously described in the "Water-soluble polymer" section.

One carboxy group-containing monomer may be used individually, or two or more carboxy group-containing monomers may be used in combination.

The proportional content of the carboxy group-containing monomer unit in the particulate polymer when all repeating units included in the particulate polymer are taken to be 100 mass% is preferably 3 mass% or more, and more preferably 5 mass% or more, and is preferably 30 mass% or less, and more preferably 20 mass% or less. When the proportional content of the carboxy group-containing monomer unit in the particulate polymer is within any of the ranges set forth above, dusting of a negative electrode can be even further suppressed and swelling of the negative electrode after cycling can be even further suppressed while also further improving cycle characteristics of a secondary battery.

### [Aromatic vinyl monomer unit]

Examples of aromatic vinyl monomers that can form the aromatic vinyl monomer unit of the particulate polymer include styrene, styrene sulfonic acid and salts thereof, α-methylstyrene, p-t-butylstyrene, butoxystyrene, vinyltoluene, chlorostyrene, and vinylnaphthalene. One aromatic vinyl monomer may be used individually, or two or more aromatic vinyl monomers may be used in combination. Styrene is preferable as an aromatic vinyl monomer from a viewpoint of even further suppressing dusting of a negative electrode and even further suppressing swelling of the negative electrode after cycling while also further improving cycle characteristics of a secondary battery. In other words, the particulate polymer preferably includes a styrene unit as the aromatic vinyl monomer unit.

The proportional content of the aromatic vinyl monomer unit in the particulate polymer when all repeating units included in the particulate polymer are taken to be 100 mass% is preferably 20 mass% or more, and more preferably 25 mass% or more, and is preferably 80 mass% or less, and more preferably 75 mass% or less. When the proportional content of the aromatic vinyl monomer unit in the particulate polymer is within any of the ranges set forth above, dusting of a negative electrode can be even further suppressed and swelling of the negative electrode after cycling can be even further suppressed while also further improving cycle characteristics of a secondary battery.

### [Conjugated diene monomer unit]

Examples of conjugated diene monomers that can form the conjugated diene monomer unit of the particulate polymer include the same monomers as conjugated diene monomers previously described in the "Water-soluble polymer" section.

One conjugated diene monomer may be used individually, or two or more conjugated diene monomers may be used in combination. 1,3-Butadiene is preferable as a conjugated diene monomer from a viewpoint of even further suppressing dusting of a negative electrode and even further suppressing swelling of the negative electrode after cycling while also further improving cycle characteristics of a secondary battery. In other words, the particulate polymer preferably includes a 1,3-butadiene unit as the conjugated diene monomer unit.

The proportional content of the conjugated diene monomer unit in the particulate polymer when all repeating units included in the particulate polymer are taken to be 100 mass% is preferably 25 mass% or more, and more preferably 30 mass% or more, and is preferably 80 mass% or less, and more preferably 75 mass% or less. When the proportional content of the conjugated diene monomer unit in the particulate polymer is within any of the ranges set forth above, dusting of a negative electrode can be even further suppressed and swelling of the negative electrode after cycling can be even further suppressed while also further improving cycle characteristics of a secondary battery.

### [Other repeating units]

Examples of other repeating units besides the carboxy group-containing monomer unit, aromatic vinyl monomer unit, and conjugated diene monomer unit that can be included in the above-described particulate polymer include monomer units derived from known monomers (other monomers) that are copolymerizable with a carboxy group-containing monomer, an aromatic vinyl monomer, and a conjugated diene monomer such as described above without any specific limitations. One other monomer may be used individually, or two or more other monomers may be used in combination.

The content of the particulate polymer in the slurry for a negative electrode is preferably 100 parts by mass or more, and more preferably 500 parts by mass or more per 100 parts by mass of the CNTs, and is preferably 5,000 parts by mass or less, and more preferably 2,000 parts by mass or less per 100 parts by mass of the CNTs. When the content of the particulate polymer is within any of the ranges set forth above, dusting of a negative electrode can be even further suppressed and swelling of the negative electrode after cycling can be even further suppressed while also further improving cycle characteristics of a secondary battery.

### <Production method of slurry for negative electrode>

No specific limitations are placed on the mixing method when the above-described components are mixed to obtain the slurry for a negative electrode, and any of the known mixing devices previously described in the "Production method of conductive material paste" section can be used.

### (Negative electrode for non-aqueous secondary battery)

The presently disclosed negative electrode includes a negative electrode mixed material layer obtained using the presently disclosed slurry for a negative electrode set forth above. More specifically, the presently disclosed negative electrode normally includes the aforementioned negative electrode mixed material layer on a current collector. The negative electrode mixed material layer contains a negative electrode active material, CNTs, and a water-soluble polymer serving as a dispersant and may optionally contain a binder, etc. The presently disclosed negative electrode has suppressed dusting and can cause a secondary battery to display excellent cycle characteristics as a result of including a negative electrode mixed material layer formed using the presently disclosed slurry for a negative electrode set forth above.

### <Current collector>

The current collector is formed of a material having electrical conductivity and electrochemical durability. Specifically, the current collector may, for example, be made of iron, copper, aluminum, nickel, stainless steel, titanium, tantalum, gold, platinum, or the like. Of these materials, a current collector formed of copper (copper foil) is particularly preferable as a current collector used in a negative electrode of a lithium ion secondary battery. Note that above-described material forming the current collector may be one type of material used individually or may be two or more types of materials used in combination.

### <Production method of negative electrode>

No specific limitations are placed on the method by which the presently disclosed negative electrode is produced. For example, the presently disclosed negative electrode can be produced by applying the presently disclosed slurry for a negative electrode set forth above onto at least one side of the current collector and drying the slurry for a negative electrode to form a negative electrode mixed material layer. In more detail, this production method includes a step of applying the slurry for a negative electrode onto at least one side of the current collector (application step) and a step of drying the slurry for a negative electrode that has been applied onto at least one side of the current collector to form a negative electrode mixed material layer on the current collector (drying step).

### «Application step»

The method by which the slurry for a negative electrode is applied onto the current collector can be any commonly known method without any specific limitations. Specific examples of application methods that can be used include doctor blading, dip coating, reverse roll coating, direct roll coating, gravure coating, extrusion coating, and brush coating. During application, the slurry for a negative electrode may be applied onto just one side of the current collector or may be applied onto both sides of the current collector. The thickness of the slurry coating on the current collector after application but before drying can be set as appropriate in accordance with the thickness of the negative electrode mixed material layer that is to be obtained after drying.

### <<Drying step>>

The slurry for a negative electrode on the current collector can be dried by any commonly known method without any specific limitations. Examples of drying methods that can be used include drying by warm, hot, or lowhumidity air; drying in a vacuum; and drying by irradiation with infrared light, electron beams, or the like. By drying the slurry for a negative electrode on the current collector in this manner, it is possible to form a negative electrode mixed material layer on the current collector and thereby obtain a negative electrode including the current collector and the negative electrode mixed material layer.

After the drying step, the negative electrode mixed material layer may be further subjected to a pressing process by mold pressing, roll pressing, or the like. This pressing process enables good close adherence of the negative electrode mixed material layer to the current collector.

Moreover, in a case in which the negative electrode mixed material layer contains a curable polymer, this polymer may be cured after the negative electrode mixed material layer is formed.

### (Non-aqueous secondary battery)

The presently disclosed non-aqueous secondary battery includes the presently disclosed negative electrode set forth above. Moreover, the presently disclosed non-aqueous secondary battery has excellent cycle characteristics as a result of including the presently disclosed negative electrode. Note that the presently disclosed non-aqueous secondary battery is preferably a lithium ion secondary battery, for example.

The following describes the configuration of a lithium ion secondary battery as one example of the presently disclosed non-aqueous secondary battery. This lithium ion secondary battery includes a positive electrode, a negative electrode, an electrolyte solution, and a separator. The negative electrode is the presently disclosed electrode for a non-aqueous secondary battery set forth above.

### <Positive electrode>

Any known positive electrode can be used as the positive electrode without any specific limitations.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate and is, for example, preferably 0.5 mass% to 15 mass%, more preferably 2 mass% to 13 mass%, and even more preferably 5 mass% to 10 mass%. Moreover, a known additive such as fluoroethylene carbonate or ethyl methyl sulfone may be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

### <Production method of lithium ion secondary battery>

The lithium ion secondary battery in accordance with the present disclosure can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to evaluate the weight-average molecular weight of a water-soluble polymer, the dispersion stability of a conductive material paste, the viscosity stability of a slurry for a negative electrode, the flexibility and suppression of dusting of a negative electrode, the cycle characteristics of a secondary battery, and the suppression of swelling of a negative electrode after cycling.

### <Weight-average molecular weight>

A water-soluble polymer was used as a measurement subject polymer, and the weight-average molecular weight thereof was measured by gel permeation chromatography (GPC) according to the following procedure. First, the measurement subject polymer was added to approximately 5 mL of an eluent such that the solid content concentration of the polymer was approximately 0.5 g/L and was gradually dissolved at room temperature. Once dissolution of the polymer was visually confirmed, the solution was gently filtered using a 0.45 µm filter to produce a measurement sample. The weight-average molecular weight was calculated as a standard substance-equivalent value by using a standard substance to prepare a calibration curve. Note that the measurement conditions were as follows.

### <<Measurement conditions>>

Column: Shodex OHpak (SB-G, SB-807HQ, SB-806MHQ) (product name) produced by Showa Denko K.K.
Eluent: 0.1 M Tris buffer solution (0.1 M potassium chloride added)
Flow rate: 0.5 mL/min
Sample concentration: 0.05 g/L (solid content concentration)
Injection volume: 200 µL
Column temperature: 40°C
Detector: Differential refractive index detector RI (produced by Tosoh Corporation; product name: RI-8020)
Standard substance: Monodisperse pullulan (produced by Showa Denko K.K.)

### <Dispersion stability>

The viscosity η1 of a conductive material paste straight after production was measured under conditions of a temperature of 25°C and a spindle rotation speed of 60 rpm using a B-type viscometer at a point 60 seconds after the start of rotation of the spindle. The conductive material paste for which η1 had been measured was stored under conditions of 10 days at rest at 25°C, and the viscosity η2 after storage was measured in the same way as the viscosity η1. A ratio of η2 relative to η1 (η2/η1) was taken as a paste viscosity ratio and was evaluated by the following standard. A value of closer to 1.0 for the paste viscosity ratio indicates that viscosity increase of the conductive material paste is suppressed.
A: Paste viscosity ratio of less than 1.15
B: Paste viscosity ratio of not less than 1.15 and less than 1.6
C: Paste viscosity ratio of not less than 1.6 and less than 2.0
D: Paste viscosity ratio of 2.0 or more

### <Viscosity stability>

The viscosity η3 of a slurry for a negative electrode straight after production was measured under conditions of a temperature of 25°C and a spindle rotation speed of 60 rpm using a B-type viscometer at a point 60 seconds after the start of rotation of the spindle. The slurry for a negative electrode for which η3 had been measured was stored under conditions of 3 days at rest at 25°C, and the viscosity η4 after storage was measured in the same way as the viscosity η3. A ratio of η4 relative to η3 (η4/η3) was taken as a slurry viscosity ratio and was evaluated by the following standard. A value of closer to 1.0 for the slurry viscosity ratio indicates that viscosity increase of the slurry for a negative electrode is suppressed.
A: Slurry viscosity ratio of less than 1.2
B: Slurry viscosity ratio of not less than 1.2 and less than 1.4
C: Slurry viscosity ratio of not less than 1.4 and less than 1.5
D: Slurry viscosity ratio of 1.5 or more

### <Flexibility>

A cylindrical rod made of SUS was placed at the negative electrode mixed material layer-side of a negative electrode, the negative electrode was wound around the cylindrical rod, and the presence or absence of cracking of the negative electrode mixed material layer was visually evaluated. This was performed using SUS cylindrical rods of different diameters. The absence of cracking with an SUS cylindrical rod of small diameter indicates that the negative electrode mixed material layer and negative electrode have excellent flexibility.
A: No cracking with ∅3.0 mm rod
B: No cracking with ∅3.5 mm rod, but cracking with ∅3.0 mm rod
C: No cracking with ∅4.0 mm rod, but cracking with ∅3.5 mm rod
D: No cracking with ∅5.0 mm rod, but cracking with ∅4.0 mm rod

### <Suppression of dusting>

A negative electrode was cut to 5 cm × 5 cm, and the weight W1 of the resultant test specimen was measured using an electronic balance (5 decimal places). Next, the copper foil (current collector) side of the test specimen was placed facing upward, and the test specimen was subjected to cutting (slitting) at 11 locations in parallel to the application direction (direction in which a negative electrode mixed material layer slurry was applied during formation of the negative electrode mixed material layer) from the copper foil-side using a cross-cut jig of 1 mm in width (jig in accordance with JIS K5400) and a cutter of 9 mm in width. Note that the blade of the cutter was folded to provide a fresh blade prior to use. Both sides of the test specimen were lightly brushed using a brush to cause detached powder to fall off, and then the weight W2 of the test specimen was measured using an electronic balance (5 decimal places).

The dusting rate was calculated from the determined weights W1 and W2 (dusting rate = (W1 - W2)/W1 × 100(%)) and was evaluated by the following standard. A smaller value for the dusting rate indicates that dusting of the negative electrode can be suppressed.
A: Dusting rate of less than 0.15%
B: Dusting rate of not less than 0.15% and less than 0.25%
C: Dusting rate of not less than 0.25% and less than 0.5%
D: Dusting rate of 0.5% or more

### <Cycle characteristics>

A lithium ion secondary battery was left at rest in a 25°C environment for 24 hours after injection of electrolyte solution. Next, the lithium ion secondary battery was subjected to a charge/discharge operation of charging to a cell voltage of 4.35 V by 0.2C constant current-constant voltage charging (cut off: 0.02C) and constant current discharging to a cell voltage of 2.75 V, and the initial capacity C0 was measured. The lithium ion secondary battery was further subjected to repeated charging and discharging of charging to a cell voltage of 4.35 V by 1.0C constant current-constant voltage charging (cut off: 0.02C) and discharging to a cell voltage of 2.75 V by a constant-current method in a 25°C environment, and the capacity C1 after 100 cycles was measured. A capacity maintenance rate (%) was calculated (= C1/C0 × 100) and was evaluated by the following standard. A higher capacity maintenance rate indicates that the lithium ion secondary battery has better cycle characteristics.
A: Capacity maintenance rate of 90% or more
B: Capacity maintenance rate of not less than 85% and less than 90%
C: Capacity maintenance rate of not less than 80% and less than 85%
D: Capacity maintenance rate of less than 80%

### <Suppression of swelling after cycling>

The thickness of a negative electrode prior to lithium ion secondary battery assembly was measured at 5 arbitrary locations using a film thickness measurement instrument (produced by TECLOCK Co., Ltd.; constant pressure thickness meter in accordance with JIS 6250), and an average value of the measured thicknesses was taken to be D0.

Next, the negative electrode that had undergone thickness measurement was used to produce a lithium ion secondary battery. The lithium ion secondary battery was left at rest in a 25°C environment for 24 hours after injection of electrolyte solution. Next, the lithium ion secondary battery was subjected to a charge/discharge operation of charging to a cell voltage of 4.35 V by 0.2C constant current-constant voltage charging (cut off: 0.02C) and constant current discharging to a cell voltage of 2.75 V. The lithium ion secondary battery was further subjected to repeated charging and discharging of charging to a cell voltage of 4.35 V by 1.0C constant current-constant voltage charging (cut off: 0.02C) and discharging to a cell voltage of 2.75 V by a constant-current method in a 25°C environment so as to perform 100 cycles. After 100 cycles, the lithium ion secondary battery was charged to a cell voltage of 4.35 V by 1.0C constant current-constant voltage charging (cut off: 0.02C) and was subsequently dismantled to take out the negative electrode. The thickness of this negative electrode was measured at 5 arbitrary locations using a film thickness measurement instrument (produced by TECLOCK Co., Ltd.; constant pressure thickness meter in accordance with JIS 6250), and an average value of the measured thicknesses was taken to be D1.

The swelling after cycling (%) was calculated (= D1/D0 × 100) and was evaluated by the following standard. A smaller value indicates that swelling of the negative electrode due to cycling is suppressed.
A: Swelling after cycling of 130% or less
B: Swelling after cycling of more than 130% and not more than 140%
C: Swelling after cycling of more than 145% and not more than 150%
D: Swelling after cycling of more than 150%

### (Example 1)

### <Production of water-soluble polymer (dispersant)>

A reactor was charged with 473 parts of deionized water, 60 parts of methacrylic acid (carboxy group-containing monomer), 0.6 parts of t-dodecyl mercaptan, and 3.0 parts of sodium dodecylbenzenesulfonate diluted to a solid content concentration of 10% with deionized water. Next, the inside of the reactor was tightly sealed and was subjected to nitrogen purging twice while being stirred by an agitator. Once the nitrogen purging was complete, 40 parts of nitrogen purged isoprene (conjugated diene monomer) was charged to the reactor. Thereafter, the inside of the reactor was controlled to 5°C. Once it had been confirmed that the inside of the reactor was controlled to 5°C, 0.01 parts of hydrosulfite was dissolved in deionized water and was added into the reactor. Five minutes after addition of the hydrosulfite, 0.1 parts of cumene hydroperoxide (first addition) was added. In addition, a solution obtained by dissolving 0.04 parts of sodium formaldehyde sulfoxylate (produced by Mitsubishi Gas Chemical Company, Ltd.; product name: SFS) (first addition), 0.003 parts of ferrous sulfate (produced by Chubu Chelest Co., Ltd.; product name: FROST Fe) (first addition), and 0.03 parts of ethylenediaminetetraacetic acid (produced by Chubu Chelest Co., Ltd.; product name: CHELEST 400G) in 9.0 parts of deionized water using a separate vessel was added into the reactor.

Once the polymerization conversion rate reached 40%, the inside of the reactor was heated to 10°C. Thereafter, once the polymerization conversion rate reached 60%, the inside of the reactor was heated to 18°C. At the point at which the polymerization conversion rate reached 70%, 0.09 parts of cumene hydroperoxide (second addition) was added into the reactor. In addition, a solution obtained by dissolving 0.04 parts of sodium formaldehyde sulfoxylate (produced by Mitsubishi Gas Chemical Company, Ltd.; product name: SFS) (second addition), 0.003 parts of ferrous sulfate (produced by Chubu Chelest Co., Ltd.; product name: FROST Fe) (second addition), and 0.03 parts of ethylenediaminetetraacetic acid (produced by Chubu Chelest Co., Ltd.; product name: CHELEST 400G) in 9.0 parts of deionized water using a separate vessel was added into the reactor.

Once the polymerization conversion rate reached 93%, 0.12 parts of 2,2,6,6-tetramethylpiperidine-1-oxyl diluted with 10.35 parts of deionized water was added into the reactor to stop the reaction. After the reaction had stopped, deodorization was performed by an evaporator until residual isoprene was 300 ppm or less. Once the deodorization was complete, the pH was adjusted to 8 under stirring using 5% lithium hydroxide aqueous solution to yield an aqueous solution of a water-soluble polymer (dispersant).

The weight-average molecular weight of the obtained water-soluble polymer was measured. The result is shown in Table 1. Note that the weight-average molecular weight was "70,000" but is denoted as "7" in Table 1 with "×10⁴" omitted. Weight-average molecular weights in the tables are denoted in the same manner for the following examples and comparative examples.

### <Production of particulate polymer (binder)>

A 5 MPa pressure-resistant vessel A equipped with a stirrer was charged with 3.15 parts of styrene, 1.66 parts of 1,3-butadiene, 0.2 parts of sodium lauryl sulfate as an emulsifier, 20 parts of deionized water, and 0.03 parts of potassium persulfate as a polymerization initiator. These materials were thoroughly stirred, were subsequently heated to 60°C to initiate polymerization, and were reacted for 6 hours to yield seed particles.

After the above-described reaction, heating was performed to 75°C, addition of a mixture of 53.85 parts of styrene, 31.34 parts of 1,3-butadiene, 10.0 parts of acrylic acid, 0.25 parts of tert-dodecyl mercaptan as a chain transfer agent, and 0.35 parts of sodium lauryl sulfate as an emulsifier from a separate vessel B was initiated with respect to the pressure-resistant vessel A, and, simultaneously thereto, addition of 1 part of potassium persulfate as a polymerization initiator was initiated with respect to the pressure-resistant vessel A so as to initiate a second stage of polymerization.

In other words, the overall monomer composition was 57 parts of styrene, 33 parts of 1,3-butadiene, and 10 parts of acrylic acid.

Addition of the total amount of the mixture containing the monomer composition was completed at 5.5 hours after the start of the second stage of polymerization. Thereafter, the temperature was further raised to 85°C and a reaction was performed for 6 hours. Cooling was performed to quench the reaction at the point at which the polymerization conversion rate reached 97%. This mixture containing a polymerized product was adjusted to pH 8 through addition of 5% sodium hydroxide aqueous solution. Unreacted monomer was subsequently removed through thermal-vacuum distillation. Thereafter, cooling was performed to yield a water dispersion of a particulate polymer that was water-insoluble.

### <Production of conductive material paste>

A disper blade was used to stir (3,000 rpm, 60 minutes) 100 parts of single-walled CNTs (average diameter: 3 nm; G/D ratio: 5), 70 parts (in terms of solid content) of the water-soluble polymer produced as described above as a dispersant, and an appropriate amount of deionized water, and then a bead mill in which zirconia beads of 1 mm in diameter were used was used to mix these materials at a circumferential speed of 8 m/s for 30 minutes. With respect to the resultant premix, 10 parts (in terms of solid content) of the water-soluble polymer produced as described above as a dispersant was added, and a further 30 minutes of mixing was performed using the bead mill to produce a conductive material paste (solid content concentration: 2.0%). Dispersion stability was evaluated for this conductive material paste. The result is shown in Table 1.

The conductive material paste had a pH of 7.5.

### <Production of slurry for negative electrode>

A planetary mixer equipped with a disper blade was charged with 90 parts of artificial graphite (volume-average particle diameter: 24.5 µm; specific surface area: 3.5 m²/g) as a carbon-based negative electrode active material, 10 parts of SiOₓ as a silicon-based negative electrode active material, and 2.0 parts (in terms of solid content) of an aqueous solution of carboxymethyl cellulose. These materials were adjusted to a solid content concentration of 58% with deionized water and were mixed at room temperature for 60 minutes. After this mixing, the conductive material paste obtained as described above was added into the planetary mixer such that the amount of the single-walled CNTs was 0.1 parts (in terms of solid content) and was mixed. Next, the solid content concentration was adjusted to 50% with deionized water, and 1.0 parts (in terms of solid content) of the water dispersion of the particulate polymer (binder) obtained as described above was further added to yield a mixture. The obtained mixture was subjected to defoaming under reduced pressure to yield a slurry for a negative electrode having good fluidity. Viscosity stability was evaluated for this slurry for a negative electrode. The result is shown in Table 1.

### <Production of negative electrode>

The slurry for a negative electrode obtained as described above was applied onto copper foil (current collector) of 16 µm in thickness by a comma coater such as to have a thickness of 105 µm and a coating weight of 10 mg/cm² after drying. The copper foil with the slurry for a negative electrode applied thereon was conveyed inside an oven having a temperature of 100°C for 2 minutes and an oven having a temperature of 120°C for 2 minutes at a speed of 0.5 m/min to dry the slurry for a negative electrode on the copper foil and obtain a negative electrode web. This negative electrode web was rolled by roll pressing to obtain a negative electrode having a negative electrode mixed material layer thickness of 80 µm. Flexibility and suppression of dusting were evaluated for this negative electrode. The results are shown in Table 1.

### <Production of positive electrode>

A planetary mixer was charged with 95 parts of LiCoO₂ having a spinel structure as a positive electrode active material, 3 parts in terms of solid content of PVDF (polyvinylidene fluoride) as a binder, 2 parts of acetylene black as a conductive material, and 20 parts of N-methylpyrrolidone as a solvent, and these materials were mixed to yield a slurry for a positive electrode.

The obtained slurry for a positive electrode was applied onto aluminum foil (current collector) of 20 µm in thickness by a comma coater such as to have a thickness after drying of approximately 100 µm. The aluminum foil with the slurry for a positive electrode applied thereon was conveyed inside an oven having a temperature of 60°C for 2 minutes and an oven having a temperature of 120°C for 2 minutes at a speed of 0.5 m/min to dry the slurry for a positive electrode on the aluminum foil and obtain a positive electrode web. This positive electrode web was rolled by roll pressing to obtain a positive electrode having a positive electrode mixed material layer thickness of 70 µm.

### <Preparation of separator>

A separator made of a single layer of polypropylene (produced by dry method; width 65 mm, length 500 mm, thickness 25 µm, porosity 55%) was prepared. This separator was cut out as a 5 cm × 5 cm square for use in secondary battery production.

### <Production of secondary battery>

An aluminum packing case was prepared as a battery case. The positive electrode was cut out as a 4 cm × 4 cm square and was arranged with the surface at the current collector-side in contact with the aluminum packing case. Next, the square separator described above was arranged on the surface of the positive electrode mixed material layer of the positive electrode. In addition, the negative electrode was cut out as a 4.2 cm × 4.2 cm square and was arranged on the separator such that the surface at the negative electrode mixed material layer-side faced toward the separator. Thereafter, a LiPF₆ solution of 1.0 M in concentration (solvent: mixed solvent of ethylene carbonate/diethyl carbonate = 1/2 (volume ratio); additives: 2 volume% (solvent rate) of each of fluoroethylene carbonate and vinylene carbonate) was loaded as an electrolyte solution. The aluminum packing case was then closed by heat sealing at 150°C to tightly seal an opening of the aluminum packing and thereby produce a laminate cell-type lithium ion secondary battery. This lithium ion secondary battery was used to evaluate cycle characteristics and suppression of negative electrode swelling after cycling. The results are shown in Table 1.

### (Examples 2 to 4)

A water-soluble polymer, a particulate polymer, a conductive material paste, a slurry for a negative electrode, a negative electrode, a positive electrode, a separator, and a secondary battery were prepared and various evaluations were performed in the same way as in Example 1 with the exception that the amounts of isoprene and methacrylic acid were changed as follows in production of the water-soluble polymer. The results are shown in Table 1.
Example 2: Isoprene 15 parts, methacrylic acid 85 parts
Example 3: Isoprene 75 parts, methacrylic acid 25 parts
Example 4: Isoprene 7 parts, methacrylic acid 93 parts

### (Example 5)

A water-soluble polymer, a particulate polymer, a conductive material paste, a slurry for a negative electrode, a negative electrode, a positive electrode, a separator, and a secondary battery were prepared and various evaluations were performed in the same way as in Example 1 with the exception that acrylic acid was used instead of methacrylic acid and the amount of t-dodecyl mercaptan was changed from 0.6 parts to 0.35 parts in production of the water-soluble polymer. The results are shown in Table 1.

### (Example 6)

A water-soluble polymer, a particulate polymer, a conductive material paste, a slurry for a negative electrode, a negative electrode, a positive electrode, a separator, and a secondary battery were prepared and various evaluations were performed in the same way as in Example 1 with the exception that the amount of isoprene was changed to 30 parts, the amount of methacrylic acid was changed to 30 parts, 40 parts of acrylic acid was added at the same time as methacrylic acid, and the amount of t-dodecyl mercaptan was changed from 0.6 parts to 0.54 parts in production of the water-soluble polymer. The results are shown in Table 1.

### (Example 7)

A water-soluble polymer, a particulate polymer, a conductive material paste, a slurry for a negative electrode, a negative electrode, a positive electrode, a separator, and a secondary battery were prepared and various evaluations were performed in the same way as in Example 1 with the exception that 40 parts of isoprene was changed to 50 parts of 1,3-butadiene, and the amount of methacrylic acid was changed to 50 parts in production of the water-soluble polymer. The results are shown in Table 1.

### (Examples 8 to 10)

A water-soluble polymer, a particulate polymer, a conductive material paste, a slurry for a negative electrode, a negative electrode, a positive electrode, a separator, and a secondary battery were prepared and various evaluations were performed in the same way as in Example 1 with the exception that the amount of t-dodecyl mercaptan was changed as follows in production of the water-soluble polymer so as to adjust the weight-average molecular weight of the water-soluble polymer. The results are shown in Table 1.
Example 8: t-Dodecyl mercaptan 0.3 parts
Example 9: t-Dodecyl mercaptan 0.7 parts
Example 10: t-Dodecyl mercaptan 0.04 parts

### (Example 11)

A water-soluble polymer, a particulate polymer, a conductive material paste, a slurry for a negative electrode, a negative electrode, a positive electrode, a separator, and a secondary battery were prepared and various evaluations were performed in the same way as in Example 1 with the exception that multi-walled CNTs (average diameter: 10 nm; G/D ratio: 0.8) were used instead of single-walled CNTs in production of the conductive material paste. The results are shown in Table 2.

### (Example 12)

A water-soluble polymer, a particulate polymer, a conductive material paste, a slurry for a negative electrode, a negative electrode, a positive electrode, a separator, and a secondary battery were prepared and various evaluations were performed in the same way as in Example 1 with the exception that 5% sodium hydroxide aqueous solution was used instead of 5% lithium hydroxide aqueous solution in production of the water-soluble polymer. The results are shown in Table 2.

### (Examples 13 and 14)

A water-soluble polymer, a particulate polymer, a conductive material paste, a slurry for a negative electrode, a negative electrode, a positive electrode, a separator, and a secondary battery were prepared and various evaluations were performed in the same way as in Example 1 with the exception that the amount in terms of solid content of the water-soluble polymer was changed to 200 parts (Example 13) or 5 parts (Example 14) in production of the conductive material paste. The results are shown in Table 2.

Note that in production of the conductive material paste, the ratio of additive amounts (in terms of solid content) of the water-soluble polymer in the two additions of the water-soluble polymer was set as first addition: second addition = 7:1, by mass, in the same way as in Example 1.

### (Comparative Example 1)

A particulate polymer, a conductive material paste, a slurry for a negative electrode, a negative electrode, a positive electrode, a separator, and a secondary battery were prepared and various evaluations were performed in the same way as in Example 1 with the exception that the water-soluble polymer was not produced and that a sodium salt of carboxymethyl cellulose (weight-average molecular weight: 320,000) was used as a dispersant instead of the water-soluble polymer. The results are shown in Table 2.

### (Comparative Example 2)

A particulate polymer a conductive material paste, a slurry for a negative electrode, a negative electrode, a positive electrode, a separator, and a secondary battery were prepared and various evaluations were performed in the same way as in Example 1 with the exception that the water-soluble polymer was not produced and that a sodium salt of polyacrylic acid (weight-average molecular weight: 500,000) was used as a dispersant instead of the water-soluble polymer. The results are shown in Table 2.

### (Comparative Example 3)

A water-soluble polymer, a particulate polymer, a conductive material paste, a slurry for a negative electrode, a negative electrode, a positive electrode, a separator, and a secondary battery were prepared and various evaluations were performed in the same way as in Example 1 with the exception that isoprene and methacrylic acid were not used and that 20 parts of acrylic acid and 80 parts of acrylamide were used in production of the water-soluble polymer. The results are shown in Table 2.

### (Comparative Example 4)

Production of a conductive material paste was attempted in the same way as in Example 1 with the exception that the water-soluble polymer was not produced and that water-insoluble hydrogenated nitrile rubber produced as follows was used instead of the water-soluble polymer. However, it was not possible to disperse the single-walled CNTs or to produce a conductive material paste that could be used for negative electrode mixed material layer formation. Therefore, various evaluations were not performed.

### <Production of hydrogenated nitrile rubber>

A reactor having an internal capacity of 10 L was charged with 100 parts of deionized water and 23 parts of acrylonitrile, 30 parts of 1,3-butadiene, 4 parts of methacrylic acid, and 43 parts of styrene as monomers, 2 parts of potassium oleate as an emulsifier, 0.1 parts of potassium phosphate as a stabilizer, and 0.5 parts of 2,2',4,6,6'-pentamethylheptane-4-thiol (TIBM) as a molecular weight modifier were further added, and emulsion polymerization was performed at 30°C in the presence of 0.35 parts of potassium persulfate as a polymerization initiator so as to copolymerize the aforementioned monomers.

At the point at which the polymerization conversion rate reached 90%, 0.2 parts of hydroxylamine sulfate was added per 100 parts of monomer to stop the polymerization. Next, heating was performed, and then steam distillation was performed under reduced pressure at approximately 70°C to recover residual monomer. Thereafter, 2 parts of an alkylated phenol was added as an antioxidant to yield a water dispersion of a polymer.

Next, 400 mL (total solid content: 48 g) of the obtained water dispersion of the polymer was loaded into a 1 L autoclave equipped with a stirrer, and nitrogen gas was passed for 10 minutes so as to remove dissolved oxygen in the water dispersion. Thereafter, 50 mg of palladium acetate as a hydrogenation reaction catalyst was dissolved in 180 mL of water to which 4 molar equivalents of nitric acid had been added relative to Pd and was added into the autoclave. Purging of the system with hydrogen gas was performed twice, and then the contents of the autoclave were heated to 50°C in a state in which the pressure was raised to 3 MPa (gauge pressure) with hydrogen gas, and a hydrogenation reaction was performed for 6 hours. Thereafter, the contents were restored to normal temperature, the system was converted to a nitrogen atmosphere, and then an evaporator was used to perform concentrating to a solid content concentration of 40% to yield hydrogenated nitrile rubber. The obtained hydrogenated nitrile rubber was water-insoluble.

### (Comparative Example 5)

A water-soluble polymer, a particulate polymer, a negative electrode, a positive electrode, a separator, and a secondary battery were prepared and various evaluations with the exception of dispersion stability of a conductive material paste were performed in the same way as in Example 1 with the exception that a conductive material paste was not produced and that a slurry for a negative electrode produced as described below was used. The results are shown in Table 2.

### <Production of slurry for negative electrode>

A planetary mixer equipped with a disper blade was charged with 90 parts of artificial graphite (volume-average particle diameter: 24.5 µm; specific surface area: 3.5 m²/g) as a carbon-based negative electrode active material, 10 parts of SiOₓ as a silicon-based negative electrode active material, and 2.0 parts (in terms of solid content) of an aqueous solution of carboxymethyl cellulose. These materials were adjusted to a solid content concentration of 58% with deionized water and were mixed at room temperature for 60 minutes. After this mixing, 0.1 parts of single-walled CNTs (average diameter: 3 nm; G/D ratio: 5) and 0.08 parts of the water-soluble polymer (dispersant) were added into the planetary mixer and were mixed. Next, the solid content concentration was adjusted to 50% with deionized water, and 1.0 parts (in terms of solid content) of a water dispersion of a particulate polymer (binder) obtained in the same way as in Example 1 was further added to yield a mixture. The obtained mixture was subjected to defoaming under reduced pressure to yield a slurry for a negative electrode having good fluidity.

Note that in Tables 1 and 2:
"IP" indicates isoprene unit;
"MAA" indicates methacrylic acid unit;
"AA" indicates acrylic acid unit;
"BD" indicates 1,3-butadiene unit;
"CMC" indicates sodium salt of carboxymethyl cellulose;
"AAm" indicates acrylamide unit;
"HNBR" indicates hydrogenated nitrile rubber;
"Li" indicates lithium carboxylate group;
"Na" indicates sodium carboxylate group;
"K" indicates potassium carboxylate group; and
"LIB" indicates lithium ion secondary battery.

**[Table 1]**

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| CNTs | Type | | Single-walled | Single-walled | Single-walled | Single-walled | Single-walled | Single-walled | Single-walled | Single-walled | Single-walled | Single-walled |
| | Content [parts by mass] | | 100 | 100 | 100 | 100 | 100 | 100 | 100 | 100 | 100 | 100 |
| Dispersant | Monomer units | Type | IP/MAA | IP/MAA | IP/MAA | IP/MAA | IP/AA | IP/MAA/AA | BD/MAA | IP/MAA | IP/MAA | IP/MAA |
| | | Proportional content [mass%] | 40/60 | 15/85 | 75/25 | 7/93 | 40/60 | 30/30/40 | 50/50 | 40/60 | 40/60 | 40/60 |
| | Property | | Water-soluble | Water-soluble | Water-soluble | Water-soluble | Water-soluble | Water-soluble | Water-soluble | Water-soluble | Water-soluble | Water-soluble |
| | Mw [-] (×10⁴ omitted) | | 7 | 7 | 7 | 7 | 32 | 12 | 7 | 36 | 3 | 83 |
| | Type of carboxy group | | Li | Li | Li | Li | Li | Li | Li | Li | Li | Li |
| | Content [parts by mass] | | 80 | 80 | 80 | 80 | 80 | 80 | 80 | 80 | 80 | 80 |
| Paste production | | | Yes | Yes | Yes | Yes | Yes | Yes | Yes | Yes | Yes | Yes |
| Paste | Dispersion stability | | A | A | B | B | A | A | A | B | A | B |
| Slurry | Viscosity stability | | A | A | A | A | A | A | A | A | B | A |
| LIB | Cycle characteristics | | A | A | B | B | A | A | A | B | A | B |
| Negative electrode | Suppression of swelling | | A | A | B | B | A | A | A | B | A | B |
| | Suppression of dusting | | A | A | A | B | A | A | B | A | A | A |
| | Flexibility | | A | B | A | B | A | A | A | A | B | B |

**[Table 2]**

| | | | Example 11 | Example 12 | Example 13 | Example 14 | Comparative Example 1 | Comparative Example 2 | Comparative Example 3 | Comparative Example 4 | Comparative Example 5 |
|---|---|---|---|---|---|---|---|---|---|---|---|
| CNTs | Type | | Multi-walled | Single-walled | Single-walled | Single-walled | Single-walled | Single-walled | Single-walled | Single-walled | Single-walled |
| | Content [parts by mass] | | 100 | 100 | 100 | 100 | 100 | 100 | 100 | 100 | 100 |
| Dispersant | Monomer units | Type | IP/MAA | IP/MAA | IP/MAA | IP/MAA | CMC | AA | AA/AAm | HNBR | IP/MAA |
| | | Proportional content [mass%] | 40/60 | 40/60 | 40/60 | 40/60 | | 100 | 20/80 | | 40/60 |
| | Property | | Water-soluble | Water-soluble | Water-soluble | Water-soluble | Water-soluble | Water-soluble | Water-soluble | Water-insoluble | Water-soluble |
| | Mw [-] (× 10⁴ omitted) | | 7 | 7 | 7 | 7 | 32 | 50 | 38 | - | 7 |
| | Type of carboxy group | | Li | Na | Li | Li | Na | Na | Li | K | Li |
| | Content [parts by mass] | | 80 | 80 | 200 | 5 | 80 | 80 | 80 | 80 | 80 |
| Paste production | | | Yes | Yes | Yes | Yes | Yes | Yes | Yes | Yes | No |
| Paste | Dispersion stability | | A | A | A | B | C | B | A | Evaluation not possible | - |
| Slurry | | | A | A | A | B | B | C | B | | C |
| LIB | Cycle characteristics | | B | A | C | B | D | C | B | | D |
| Negative electrode | Suppression of swelling | | A | A | B | B | D | C | B | | C |
| | Suppression of dusting | | A | A | A | B | B | C | C | | C |
| | Flexibility | | A | A | A | B | D | D | D | | C |

It can be seen from Tables 1 and 2 that by using the conductive material pastes of Examples 1 to 14, which each contain CNTs, a water-soluble polymer including a conjugated diene monomer unit and a carboxy group-containing monomer unit, and water, it is possible to produce a negative electrode having suppressed dusting and a secondary battery having excellent cycle characteristics.

### INDUSTRIAL APPLICABILITY

According to the present disclosure, it is possible to provide a conductive material paste for a non-aqueous secondary battery with which it is possible to form an electrode that has suppressed dusting and that can cause a non-aqueous secondary battery to display excellent cycle characteristics.

Moreover, according to the present disclosure, it is possible to provide a slurry for a non-aqueous secondary battery negative electrode with which it is possible to form a negative electrode that has suppressed dusting and that can cause a non-aqueous secondary battery to display excellent cycle characteristics.

Furthermore, according to the present disclosure, it is possible to provide a negative electrode for a non-aqueous secondary battery that has suppressed dusting and that can cause a non-aqueous secondary battery to display excellent cycle characteristics.

Also, according to the present disclosure, it is possible to provide a non-aqueous secondary battery having excellent cycle characteristics.

## Claims

1. A conductive material paste for a non-aqueous secondary battery comprising carbon nanotubes, a dispersant, and water, wherein
the dispersant includes a water-soluble polymer including a conjugated diene monomer unit and a carboxy group-containing monomer unit.

2. The conductive material paste for a non-aqueous secondary battery according to claim 1, wherein the water-soluble polymer has a weight-average molecular weight of not less than 20,000 and not more than 500,000.

3. The conductive material paste for a non-aqueous secondary battery according to claim 1, wherein content of the water-soluble polymer is not less than 10 parts by mass and not more than 150 parts by mass per 100 parts by mass of the carbon nanotubes.

4. The conductive material paste for a non-aqueous secondary battery according to claim 1, wherein the conjugated diene monomer unit in the water-soluble polymer includes an isoprene unit.

5. The conductive material paste for a non-aqueous secondary battery according to claim 1, wherein proportional content of the conjugated diene monomer unit in the water-soluble polymer is 10 mass% or more when all repeating units included in the water-soluble polymer are taken to be 100 mass%.

6. The conductive material paste for a non-aqueous secondary battery according to claim 1, wherein the carboxy group-containing monomer unit in the water-soluble polymer includes one or more selected from the group consisting of a sodium carboxylate group, a lithium carboxylate group, and an ammonium carboxylate group.

7. The conductive material paste for a non-aqueous secondary battery according to claim 1, having a pH of not lower than 6 and not higher than 10.

8. The conductive material paste for a non-aqueous secondary battery according to claim 1, further comprising carbon black.

9. A slurry for a non-aqueous secondary battery negative electrode comprising: a negative electrode active material; and the conductive material paste for a non-aqueous secondary battery according to claim 1.

10. The slurry for a non-aqueous secondary battery negative electrode according to claim 9, wherein the negative electrode active material includes a silicon-based negative electrode active material.

11. The slurry for a non-aqueous secondary battery negative electrode according to claim 9, further comprising a particulate polymer, wherein the particulate polymer includes a carboxy group-containing monomer unit, an aromatic vinyl monomer unit, and a conjugated diene monomer unit, and proportional content of the carboxy group-containing monomer unit in the particulate polymer is not less than 3 mass% and not more than 30 mass% when all repeating units included in the particulate polymer are taken to be 100 mass%.

12. A negative electrode for a non-aqueous secondary battery comprising a negative electrode mixed material layer formed using the slurry for a non-aqueous secondary battery negative electrode according to any one of claims 9 to 11.

13. A non-aqueous secondary battery comprising the negative electrode for a non-aqueous secondary battery according to claim 12.
